(19) Europäisches Patentamt / European Patent Office / Office européen des brevets

(11) **EP 2 484 788 A1**

(12) **EUROPEAN PATENT APPLICATION**
published in accordance with Art. 153(4) EPC

(43) Date of publication:
**08.08.2012 Bulletin 2012/32**

(21) Application number: **10820361.3**

(22) Date of filing: **15.09.2010**

(51) Int Cl.:
*C22C 33/02* (2006.01)      *B22F 1/00* (2006.01)
*B22F 3/02* (2006.01)      *B22F 3/24* (2006.01)
*C21D 9/32* (2006.01)      *F16H 53/00* (2006.01)
*F16H 55/06* (2006.01)

(86) International application number:
**PCT/JP2010/065944**

(87) International publication number:
**WO 2011/040242 (07.04.2011 Gazette 2011/14)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.09.2009 JP 2009224912**
**02.09.2010 JP 2010196581**

(71) Applicant: **NTN Corporation**
**Osaka-shi, Osaka 550-0003 (JP)**

(72) Inventors:
• **OKUNO, Takahiro**
**Kuwana-shi**
**Mie 511-0867 (JP)**
• **SHIMAZU, Eiichirou**
**Kuwana-shi**
**Mie 511-0867 (JP)**

(74) Representative: **Bockhorni, Josef**
**Bockhorni & Kollegen**
**Patent- und Rechtsanwälte**
**Elsenheimerstrasse 49**
**80687 München (DE)**

(54) **POWER-TRANSMITTING PART**

(57)    A power transmission part (10, 20) is made of a sintered material obtained by press molding and firing granulated powder obtained by granulating raw material powder having iron as a main component. The sintered material can thereby be increased in density by a powder press sintering method. A power transmission part of high strength and high rigidity can thereby be obtained.

FIG.1

**EP 2 484 788 A1**

**Description**

TECHNICAL FIELD

The present invention relates to a power transmission part, and particularly to a power transmission part made of a sintered material.

BACKGROUND ART

A sintered material is obtained by press molding metallic raw material powder using a mold and sintering it by firing. This method is widely adopted as a simple method for obtaining a sintered material. Hereinafter, this method will be called a powder press sintering method. Usually, when producing a sintered material by the powder press sintering method, the relative density representing a ratio of the density of the sintered material to the true density of an ingot material will decrease, causing many holes to remain in the sintered material. Since holes are stress-concentrated spots when a stress load is applied, a sintered material is likely to be fragile stuff to principle forms of low strength and low fatigue strength. In addition, the sintered material is likely to have a rigidity lower than that of an ingot material because of including many holes.

Therefore, with the aim of increasing a sintered material in strength and rigidity, various methods including a CIP (Cold Isostatic Pressing) method and an HIP (Hot Isostatic Pressing) method have been proposed to achieve an increase in density of the sintered material.

Methods of devising metallic raw material powder include a method of finely granulating metallic raw material powder. By finely granulating metallic raw material powder, the surface area of metallic raw material powder increases. With this increase in surface area, the sinterability between adjacent powder grains is improved. Specifically, atomic bonding of metallic raw material powder grains becomes likely to take place by energy such as heat. In addition, since the internal diffusion of an element constituting the metallic raw material powder is promoted to cause holes to shrink, a sintered material of high density is obtained.

In the case of using finely granulated metallic raw material powder, however, when molding a green compact, a remarkable increase in friction loss associated with finely granulating occurs between metallic raw material powder grains and between the metallic raw material powder and a mold. Accordingly, the flowability of powder in the mold will deteriorate, so that the moldability will deteriorate. As a result, problems arise in that large holes due to a molding defect occur, increasing the density of a sintered material is difficult, and precision molding is difficult. Therefore, the method of finely granulating metallic raw material powder is limited in application.

Methods of devising the molding method include a warm molding method. For example, Japanese Patent Laying-Open No. 2004-197157 (Patent Literature 1) discloses press molding raw material powder charged into a mold with a contact portion between the inner surface of the mold and the raw material powder having a temperature of 100˚C to 225˚C. The warm molding method may improve the density of a green compact by molding raw material powder which has become likely to be plastically deformed at a high temperature. On the other hand, problems arise in that a dedicated lubricant is required and burrs at an edge portion are present, which will require a removing step.

Methods of devising a sintering temperature and a sintering time include a high-temperature long-time firing method. The high-temperature long-time firing method is a technique for making the temperature at the time of sintering higher and the sintering time longer than usual to thereby improve the sinterability, and improving the sintered density to thereby reduce holes, whereby an increase in density is achieved. In the high-temperature long-time firing method, however, crystal grains in the sintered material can become coarse, leading to a reduction in strength. A problem also resides in that a long time is required for manufacturing.

Methods of performing post processing after sintering to achieve an increase in density include a sinter forging method. The sinter forging method is a technique for subjecting a sintered material after sintering to cold forging to thereby eliminate holes. A value close to the true density can be attained in the sinter forging method, however, problems arise in that the lead time for manufacture is extended, forging equipment is required, and high precision comparable to a sintered material obtained by a conventional powder press sintering method is less likely to be obtained because of forging.

CITATION LIST

PATENT LITERATURE

PTL 1: Japanese Patent Laying-Open No. 2004-197157

SUMMARY OF INVENTION

TECHNICAL PROBLEM

Applying an iron-based sintered material having many holes to a use requested to have a high strength and a high rigidity is limited in terms of fragility in strength resulting from the holes. For a metal part made of an iron alloy requested to have such a severe strength and rigidity, a machined product obtained by cutting an ingot material and a forged product obtained by forging an ingot material are used in many cases. Therefore, when applying a metallic sintered material made of an iron alloy manufactured by a typical powder press method to a power transmission part such as a gear and a cam, problems arise in that application to a use particularly requested to present a high strength and a high rigidity is difficult and a larger size than the above-mentioned part made of an ingot material is required.

The present invention was made in view of the above-described problems, and has an object to provide a power transmission part of high strength and high rigidity by achieving an increase in density of a sintered material by a powder press sintering method.

SOLUTION TO PROBLEM

A power transmission part of the present invention is made of a sintered material obtained by press molding and firing granulated powder obtained by granulating raw material powder having iron as a main component.

As a result of intensive studies, the inventor has found out that the power transmission part made of a sintered material obtained by press molding and firing granulated powder obtained by granulating metallic fine powder is improved in moldability and sinterability and improved in radial crushing strength. The reasons why the moldability and the sinterability are improved and the radial crushing strength is improved will be considered as follows.

According to the power transmission part of the present invention, granulated powder obtained by granulating fine powder raw material powder to have a moderate grain size is used. Thus, despite the use of fine powder, the flowability of raw material powder in a mold can be improved, so that the moldability can be improved. On the other hand, through the use of fine raw material powder, the sinterability between adjacent powder grains can be improved with an increase in surface area of raw material powder. For these reasons, a sintered material of high density can be obtained without particularly using a special method such as CIP, HIP or sinter forging.

Moreover, a granulating agent used when granulating raw material powder and a lubricant required at the time of press molding should only be contained in an amount at a ratio of a small percent of the whole granulated powder. Thus, a long degreasing time as in an MIM (metal injection molding) method will not be required because the lubricant and the granulating agent disappear under typical degreasing conditions. Therefore, a power transmission part made of a sintered material of high density can be obtained in a short cycle time.

Further, since the power transmission part transmits motive power, an excessive load and a cyclic load are often applied thereto. Accordingly, chipping may occur in the power transmission part. The whole driving unit can stop because of biting a broken piece resulting from this chipping. The power transmission part of the present invention is made of a sintered material of high density, and can thus have a high radial crushing strength. This can prevent chipping from occurring in the power transmission part. The risk that the whole driving unit stops can thus be reduced.

From the foregoing, since an increase in density of the sintered material can be achieved, a power transmission part of high strength and high rigidity can be provided.

In the above-described power transmission part, the sintered material has a relative density of more than or equal to 85%, preferably more than or equal to 92%. A power transmission part made of a highly reliable sintered material of high density and high strength can thus be provided.

In the case of an iron-based alloy in the above-described power transmission part, the sintered material preferably has a breaking strength (radial crushing strength) of more than or equal to 1500 N/mm$^2$. A power transmission part made of a sintered material having a high breaking strength can thus be provided.

In the above-described power transmission part, the raw material powder has a powder grain size (D50) of less than or equal to 20 $\mu$m, preferably less than or equal to 10 $\mu$m. Holes are therefore fully filled in a short time at the time of sintering, so that an increase in density of the sintered material can be achieved.

In the above-described power transmission part, the granulated powder has a powder grain size (D50) of less than or equal to 500 $\mu$m, preferably more than or equal to 40 $\mu$m and less than or equal to 200 $\mu$m. The granulated powder can therefore fully be charged into a mold, so that an increase in density of the sintered material can be achieved.

In the above-described power transmission part, the pressure at which the granulated powder is press molded is not particularly restricted. However, as the pressure for press molding increases, the density of a compact is improved, so that holes can be made smaller. The density is thus more likely to be increased by sintering. However, since an excessive pressing pressure can shorten the mold life and cause a molding failure, such as a fracture at the time of removal from the mold and an internal crack, the pressure is preferably more than or equal to 400 MPa and less than or equal to 800 MPa. The production efficiency can thereby be improved by extending the mold life. Moreover, an increase in density of the sintered material can be achieved by reducing holes in press molding.

In the above-described power transmission part, preferably, the sintered material is further subjected to a quenching process, and has a Rockwell C scale hardness of more than or equal to HRC50. A high surface hardness can thereby be provided for the sintered material. The wear resistance can thus be improved.

In the above-described power transmission part, preferably, the sintered material is further subjected to a tempering process, and has a Rockwell C scale hardness of more than or equal to HRC50. A high toughness can thereby be provided for the sintered material. The deformation resistance can thus be improved.

In the above-described power transmission part, preferably, the power transmission part is at least one of a gear and a cam. Chipping such as tooth breakage often occurs in a gear, a cam and the like. Since at least one of the gear and the cam as the power transmission part of the present invention is made of a sintered material of high density, it can present a high breaking strength. This can prevent chipping such as tooth breakage from occurring in the gear and the cam. The risk that the whole driving unit stops can thus be reduced.

In the above-described power transmission part, preferably, an equivalent circle diameter of a maximum hole included in the sintered material obtained by an extreme value statistical method is less than or equal to 80 $\mu$m. A crack resulting from a large hole included in stuff to principle forms can thereby be prevented from progressing when a stress is applied. Therefore, an increase in strength can be achieved, and the power transmission part made of an iron-based sintered material can be improved in reliability.

In the above-described power transmission part, preferably, the equivalent circle diameter of the maximum hole included in the sintered material obtained by the extreme value statistical method is less than or equal to 40 $\mu$m. A crack resulting from a large hole included in stuff to principle forms can thereby be prevented further from progressing when a stress is applied. Therefore, a further increase in strength can be achieved.

ADVANTAGEOUS EFFECTS OF INVENTION

As described above, according to the power transmission part of the present invention, a highly reliable power transmission part of high strength and high rigidity can be provided by increasing the density of a sintered material by a powder press sintering method.

BRIEF DESCRIPTION OF DRAWINGS

Fig. 1 is a schematic perspective view of a gear in an embodiment of the present invention.
Fig. 2 is a schematic perspective view of a cam in an embodiment of the present invention.
Fig. 3 is a drawing showing the outline of a method of manufacturing a power transmission part in an embodiment of the present invention.
Fig. 4 is a micrograph showing a sample surface of granulated powder of Example 1 of the present invention under a magnification of 500x.
Fig. 5 is a micrograph showing a sample surface of granulated powder of Example 2 of the present invention under a magnification of 500x.
Fig. 6 is a micrograph showing a sample surface of raw material powder of Comparative Example 1 under a magnification of 500x.
Fig. 7 is a micrograph showing a sample surface of granulated powder of Example 1 of the present invention under a magnification of 1000x.
Fig. 8 is a micrograph showing a sample surface of granulated powder of Example 2 of the present invention under a magnification of 1000x.
Fig. 9 is a micrograph showing a sample surface of raw material powder of Comparative Example 1 under a magnification of 1000x.
Fig. 10 is a micrograph showing a sample surface of green body of Example 1 of the present invention under a magnification of 1000x.
Fig. 11 is a micrograph showing a sample surface of green body of Example 2 of the present invention under a magnification of 1000x.
Fig. 12 is a micrograph showing a sample surface of green body of Comparative Example 1 under a magnification of 1000x.
Fig. 13 is a micrograph showing a sample surface of sintered material of Example 1 of the present invention under a magnification of 1000x.
Fig. 14 is a micrograph showing a sample surface of sintered material of Example 2 of the present invention under a magnification of 1000x.

Fig. 15 is a micrograph showing a sample surface of sintered material of Comparative Example 1 under a magnification of 1000x.

Fig. 16 is a photograph showing the shape of sample of sintered material of Example 1 of the present invention after a radial crushing test.

Fig. 17 is a photograph showing the shape of sample of sintered material of Example 2 of the present invention after a radial crushing test.

Fig. 18 is a photograph showing the shape of a sample of sintered material of Comparative Example 1 after a radial crushing test.

DESCRIPTION OF EMBODIMENTS

An embodiment of the present invention will be described below based on the drawings.

The structure of a power transmission part of an embodiment of the present invention will be described first. The power transmission part of an embodiment of the present invention can include a gear and a cam.

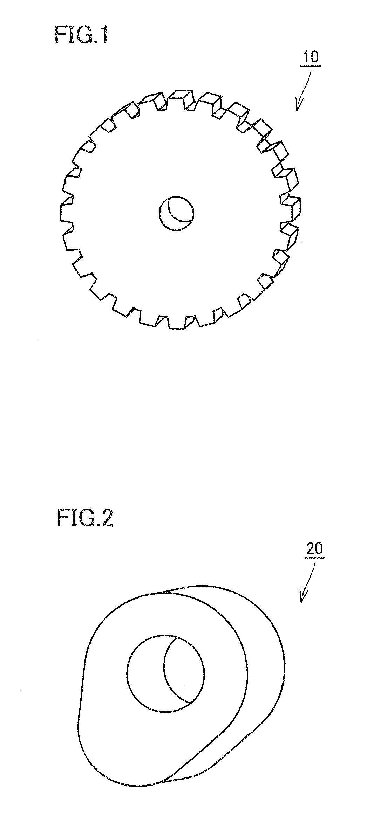

Referring to Fig. 1, a gear 10 as an example of the power transmission part in an embodiment of the present invention is a spur gear. Gear 10 has a hole at its central part as viewed in a plan view for a shaft to be fitted therethrough. Referring to Fig. 2, a cam 20 as another example of the power transmission part in an embodiment of the present invention is a plate cam. Cam 20 has a hole at its central part as viewed in a plan view for a shaft to be fitted therethrough.

Next, a method of manufacturing the power transmission part of an embodiment of the present invention will be described.

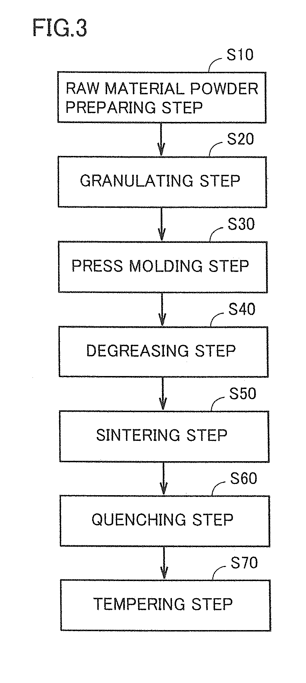

Referring to Fig. 3, in the method of manufacturing the power transmission part of an embodiment of the present invention, a raw material powder preparing step (S10) is carried out first. In this step (S10), raw material powder having iron as a main component is prepared and mixed as a material for the power transmission part. The raw material powder having iron as a main component includes, for example, SUS316L (JIS standards) and a 2% Ni (nickel)-containing iron alloy. In addition, grains of copper, molybdenum disulfide, graphite, or the like can also be blended if needed.

The raw material powder preferably has a powder grain size (D50) of less than or equal to 20 $\mu$m. With raw material powder having a coarse powder grain size, large holes will remain between raw material powder grains constituting a compact (green body) in a posterior step, and the holes will not be fully filled at the time of sintering, so that an increase in density cannot be achieved. Therefore, fine raw material powder is preferable. With raw material powder having a powder grain size (D50) of less than or equal to 20 $\mu$m, the holes will be fully filled at the time of sintering, so that an increase in density can be achieved.

Next, a granulating step (S20) is carried out. In this step (S20), the above-described raw material powder is granulated. Granulated powder is thereby formed. By granulating the above-described raw material powder, the flowability of the raw material powder in a mold is improved, so that the moldability can be ensured. Granulated powder is, for example, an assembly obtained by adding, to the above-described raw material powder, additives including a lubricant, such as zinc stearate as a metal-based lubricant for reducing a friction loss at the time of molding or ethylenebisstearamide as a non-metal-based lubricant and a mold releasing agent as well as a granulating agent made of an organic substance or the like serving as a paste for providing a moderate strength for granulated powder, and agglomerating the above-described raw material powder.

The raw material powder preferably has a powder grain size (D50) of less than or equal to 500 $\mu$m. When it exceeds 500 $\mu$m, in the case of a minute gear (gearwheel), for example, granulated powder may be unlikely to fill tooth tips or a sufficient amount of granulated powder may be unlikely to be loaded when charging the granulated powder into the mold. The granulated powder preferably has a spherical shape particularly because of its excellent flowability.

Next, a press molding step (S30) is carried out. In this step (S30), the above-described granulated powder is press molded. A green body (green compact) is thereby formed. The press molding pressure when producing the green body is not particularly restricted, but is preferably less than or equal to 800 MPa from the viewpoint of preventing the mold life reduction, a fracture at the time of removal from the mold, and occurrence of internal crack which would be caused by mold wear and the like. If the press molding pressure is too small, the granulated powder is less likely to break and to be transformed under the press molding pressure, so that large holes of more than or equal to several tens of micrometers will remain in the green body, so that an increase in density may not be achieved even if the green body is sintered. Therefore, molding is preferably carried out at a press molding pressure of more than or equal to 400 MPa when producing the green body.

Next, a degreasing step (S40) is carried out. In this step (S40), the lubricant, the granulating agent and the like included in the above-described green body are removed. Since degreasing can be carried out under conditions similar to those of a typical powder press sintering method, it is not particularly necessary to extend the time and raise the temperature. As degreasing conditions, the above-described green body is heated in an inactive gas atmosphere, such as a nitrogen atmosphere, at a temperature of 750°C for 30 minutes, for example.

Next, a sintering step (S50) is carried out. In this sintering step (S50), the above-described degreased green body is fired. A sintered material is thereby formed. Since sintering can be carried out under conditions similar to those of a typical powder press sintering method, it is not particularly necessary to extend the time and raise the temperature. As sintering conditions, for example, the above-described degreased green body is raised in temperature to 1250°C, and is then heated at that temperature for 60 minutes.

Next, a quenching step (S60) is carried out. In this step (S60), the above-described sintered material is subjected to a quenching process if needed. A high surface hardness can thereby be provided for the sintered material. The wear resistance can thus be improved. The quenching process is a process for rapidly cooling from the state having been heated to an austenitizing temperature ($A_3$ transformation point) or above, and as conditions therefor, rapid cooling is performed from a temperature of about 850°C, for example.

Next, a tempering step (S70) is carried out. In this step (S60), the above-described quenched sintered material is subjected to a tempering process. A high toughness can thereby be provided for the sintered material. The deformability can thus be improved. As conditions for the tempering process, heating to a temperature of less than or equal to an A, transformation point, for example, 400 to 650°C, and then rapid cooling is performed.

In addition, a hard anodic oxidation coating process with CrN (chromium nitride), TiN (titanium nitride), WC/C (tungsten carbide/carbon), DLC (diamond-like carbon), or the like may be performed if needed. Further, of power transmission parts of an embodiment of the present invention, parts having a relative density of more than or equal to 95% may be subjected to a wet plating process.

Although the degreasing step (S40) and the sintering step (S50) are described above separately, degreasing and sintering may be performed in one step. Although the press molding (S30), the degreasing step (S40), the sintering step (S50), and the tempering step (S60) are described above separately, press molding, degreasing/sintering/quenching may be performed in one step.

It is noted that, although the lubricant and the granulating agent disappear at the time of degreasing and sintering, they may remain in part without disappearing.

Next, effects of the power transmission part of an embodiment of the present invention will be described.

If fine raw material powder is press molded as it is by the powder press sintering method, the moldability will deteriorate due to a friction loss. The power transmission part of an embodiment of the present invention is made of a sintered material obtained by press molding and firing granulated powder obtained by granulating raw material fine powder having iron as a main component. By press molding the granulated powder by the powder press sintering method, the flowability of the material powder in the mold can be improved, so that the moldability can be improved. Since fine raw material powder can thus be used, the sinterability between adjacent powder grains can be improved with an increase in surface area of raw material powder. A sintered material of high density can thereby be obtained.

Moreover, the lubricant and the granulating agent used when granulating the raw material powder should only be contained in an amount at a ratio of a small percent of the whole granulated powder, because the granulated powder should only be formed spherically, for example. The lubricant and the granulating agent disappear at the time of degreasing and sintering because of their ratio as low as a small percent of the whole granulated powder. Therefore, a sintered material of high density can be obtained.

Further, since the power transmission part transmits motive power, an excessive load and a cyclic load are often applied thereto. Therefore, chipping often occurs in the power transmission part. The whole driving unit is very likely to stop because of biting a broken piece resulting from this chipping. The power transmission part of an embodiment of the present invention is made of a sintered material of high density, and can thus have a high radial crushing strength. This can prevent chipping from occurring in the power transmission part. The risk of the whole driving unit stopping can thus be reduced.

From the foregoing, since an increase in density of the sintered material can be achieved, a power transmission part of high strength and high rigidity can be provided.

According to the power transmission part of an embodiment of the present invention, the sintered material has a relative density of more than or equal to 85%. A power transmission part made of a sintered material of high density can thus be provided.

According to the power transmission part of an embodiment of the present invention, the sintered material has a breaking strength (radial crushing strength) of more than or equal to 1500 N/mm$^2$. A power transmission part made of a sintered material having a high breaking strength can thus be provided.

With raw material powder having a coarse powder grain size, large holes will remain between raw material powder grains constituting a compact (green body) in a posterior step, and the holes will not be fully filled at the time of sintering, so that an increase in density cannot be achieved. Therefore, fine raw material powder is preferable. According to the power transmission part of an embodiment of the present invention, since raw material powder has a powder grain size (D50) of less than or equal to 20 μm, the holes will be fully filled at the time of sintering, so that an increase in density of the sintered material can be achieved.

If the powder grain size (D50) of granulated powder exceeds 500 μm, in the case of a minute gear (gearwheel), for example, granulated powder may be unlikely to fill tooth tips or a sufficient amount of granulated powder may be unlikely to be loaded when charging the granulated powder into the mold. According to the power transmission part of an embodiment of the present invention, since the granulated powder has a powder grain size (D50) of less than or equal to 500 $\mu$m, the mold can be fully filled with the granulated powder, so that an increase in density of the sintered material can be achieved.

The pressure by which the granulated powder is press molded is preferably less than or equal to 800 MPa from the viewpoint of preventing the mold life reduction, a fracture at the time of removal from the mold, and occurrence of internal crack which would be caused by mold wear and the like. If the press molding pressure is too small, the granulated powder is less likely to break and to be transformed under the press molding pressure, so that large holes of more than or equal to several tens of micrometers will remain in the green body, so that an increase in density may not be achieved even if the green body is sintered. Therefore, molding is preferably carried out at a press molding pressure of more than or equal to 400 MPa when producing the green body. According to the power transmission part of an embodiment of the present invention, since the pressure at which the granulated powder is press molded is more than or equal to 400 MPa and less than or equal to 800 MPa, the production efficiency can be improved by extending the mold life. Moreover, an increase in density of the sintered material can be achieved by reducing holes in press molding.

According to the power transmission part of an embodiment of the present invention, the sintered material is further subjected to a quenching process, and has a Rockwell C scale hardness of more than or equal to HRC50. Therefore, a high surface hardness can be provided for the sintered material. The wear resistance can thus be improved.

According to the power transmission part of an embodiment of the present invention, the sintered material is further subjected to a tempering process, and has a Rockwell C scale hardness of more than or equal to HRC50. Therefore, a high surface hardness and a high toughness can be provided for the sintered material. The deformability can thus be improved.

Chipping such as tooth breakage often occurs in a gear, a cam and the like. Since at least one of the gear and the cam as the power transmission part of an embodiment of the present invention is made of a sintered material of high density, it can present a high breaking strength. This can prevent chipping such as tooth breakage from occurring in the gear and the cam. The risk that the whole driving unit stops can thus be reduced.

Other methods of molding the power transmission part can include MIM (metal injection molding) and extrusion molding. In MIM, the amount of a lubricant and a granulating agent is very large, typically more than or equal to about 40% by volume, raising a problem in that a degreasing time for removing them is extended. Another problem resides in that the coefficient of contraction is increased. Extrusion molding raises a problem of poor yield. Therefore, according to the power transmission part of an embodiment of the present invention, a power transmission part of high density can be obtained efficiently as compared to a power transmission part molded by MIM and extrusion molding.

Through the use of fine raw material powder, voids between raw material powder grains when a compact (green body) is produced become smaller, and in turn holes in the sintered material also become smaller. Because the holes become smaller, a stress imposed around the holes when a stress is applied also become smaller. Therefore, a crack that would lead to breakage is prevented from progressing, so that an increase in strength can be achieved. That is, the larger the hole diameter, a crack is more likely to progress, so that the sintered material is more likely to be fragile.

When the equivalent circle diameter of a maximum hole included in the sintered material obtained by an extreme value statistical method is more than 80 $\mu$m, a crack resulting from a large hole is likely to progress when a stress is applied, and the sintered material may thereby be broken.

The extreme value statistical method is a technique capable of measuring the size of the largest inclusion among inclusions in an area to be a reference for sample test (a test reference area), and estimating by statistical processing the size of the largest inclusion in an area subjected to prediction (a prediction area). An iron-based sintered material had in some cases a significantly low strength when a large hole is present, however, according to the present method, the diameter of the maximum hole included in the sintered material can be controlled, so that a sintered body of high density can be improved in mechanical reliability.

According to the power transmission part of an embodiment of the present invention, the equivalent circle diameter of the maximum hole included in the sintered material obtained by the extreme value statistical method is less than or equal to 80 $\mu$m. Now that the diameter of the maximum hole included in stuff to principle forms can be controlled to have a suitable dimension, a crack resulting from a large hole can be prevented from progressing when a stress is applied. Therefore, an increase in strength and an increase in reliability can be achieved.

According to the power transmission part of an embodiment of the present invention, since the equivalent circle diameter of the maximum hole included in the sintered material obtained by the extreme value statistical method is less than or equal to 40 $\mu$m, the diameter of the maximum hole included in the stuff to principle forms can further be reduced. Therefore, a further increase in strength and a further increase in reliability can be achieved.

Examples

Examples will be described below.

With materials and under sample producing conditions shown in Table 1, a plurality of samples of Example 1 and samples of Example 2 were produced as examples of the present invention, and a plurality of samples of Conventional Example 1 were produced as a conventional example.

[Table 1]

|  | Example 1 | Example 2 | Conventional Example 1 |
|---|---|---|---|
| Material | SUS316L | SUS316L | SUS316L |
| Raw material powder grain size (D50) | 6 μm | 10 μm | 50 μm |
| Granulated powder grain size (D50) | 150 μm | 120 μm |  |
| Molding pressure | 600 MPa | 800 MPa | 600 MPa |
| Degreasing conditions (temperature, time) | 750°C, 30 min. | 750°C, 30 min. | 750°C, 30 min. |
| Sintering conditions (temperature, time) | 1250°C, 60 min. | 1200°C, 60 min. | 1250°C, 60 min. |

Granulated powder was used in Example 1 and Example 2, and powder for powder press molding was used in Comparative Example 1. Each sample was a cylindrical sintered material having an outer diameter of 12 mm, an inner diameter of 6 mm, and a height of 8 mm.

Example 1, Example 2 and Conventional Example 1 were measured in relative density and radial crushing strength as breaking strength. The relative density was obtained by measuring the density of sample and calculating in comparison with the true density of SUS316L as the material of sample. The true density of SUS316L was set at 7.98 g/cm$^3$.

The radial crushing strength was obtained by conducting a radial crushing test of radially compressing a sample, and measuring the strength when the cylindrical sample was broken. The radial crushing speed was set at 1 mm/min.

The measured results of relative density and radial crushing strength of Example 1, Example 2 and Conventional Example 1 are shown in Table 2.

[Table 2]

|  | Example 1 | Example 2 | Conventional Example 1 |
|---|---|---|---|
| Relative density | more than or equal to 92% | more than or equal to 85% and less than 92% | less than 85% |
| Radial crushing strength | more than or equal to 2500 N/mm$^2$ | more than or equal to 1500 N/mm$^2$ and less than 2500 N/mm$^2$ | less than 1500 N/mm$^2$ |

For the relative density, as shown in Table 2, the relative density of Example 1 was more than or equal to 92%. The relative density of Example 2 was more than or equal to 85% and less than 92%. The relative density of Conventional Example 1 was less than 85%.

For the radial crushing strength, as shown in Table 2, the radial crushing test was conducted in Example 1 by radial compression at 2500 N/mm$^2$. In Example 1, the occurrence of crack was not found, and breakage did not occur. The radial crushing test was conducted in Example 2 at more than or equal to 1500 N/mm$^2$ and less than 2500 N/mm$^2$. In Example 2, there were cases found where a minute crack occurred, which however did not lead to breakage. The radial crushing test was conducted in Conventional Example 1 at less than 1500 N/mm$^2$. In Conventional Example 1, a crack occurred, and breakage occurred.

**EP 2 484 788 A1**

Then, the state of sample surface in granulated powder, green body and sintered material of Example 1, Example 2 and Conventional Example 1 will be described.

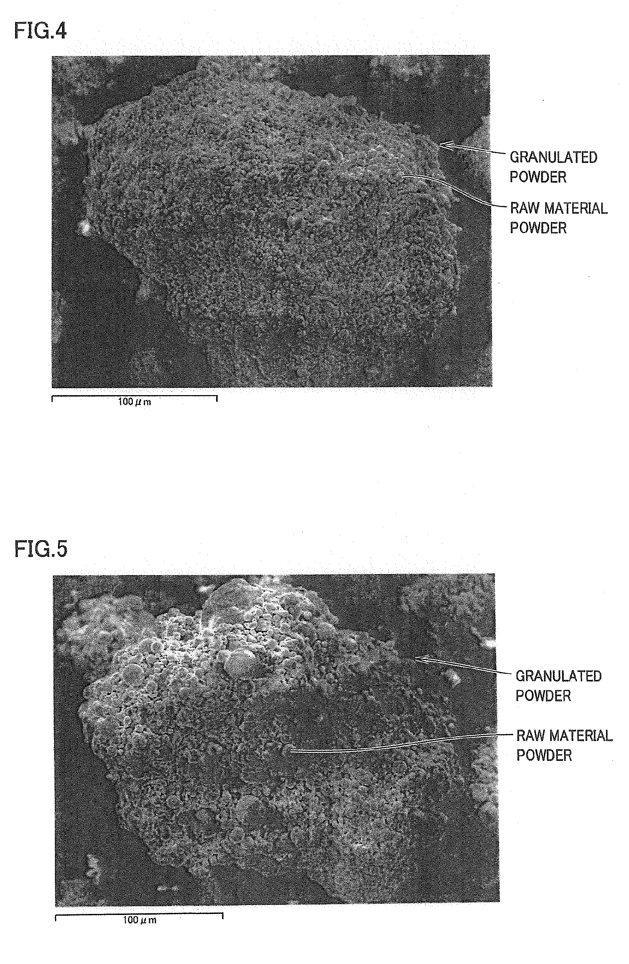

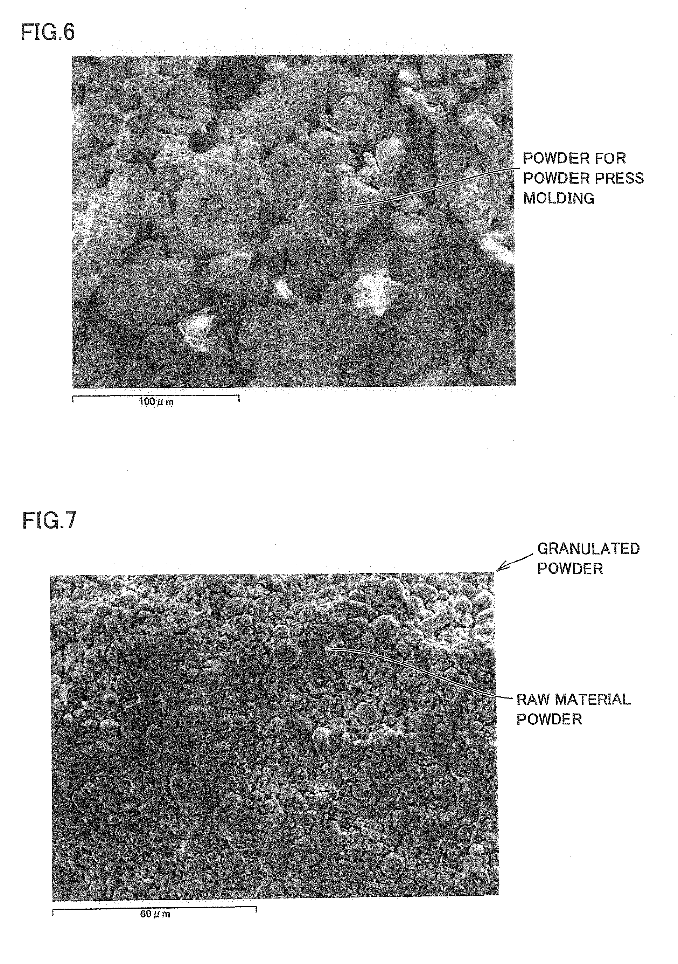

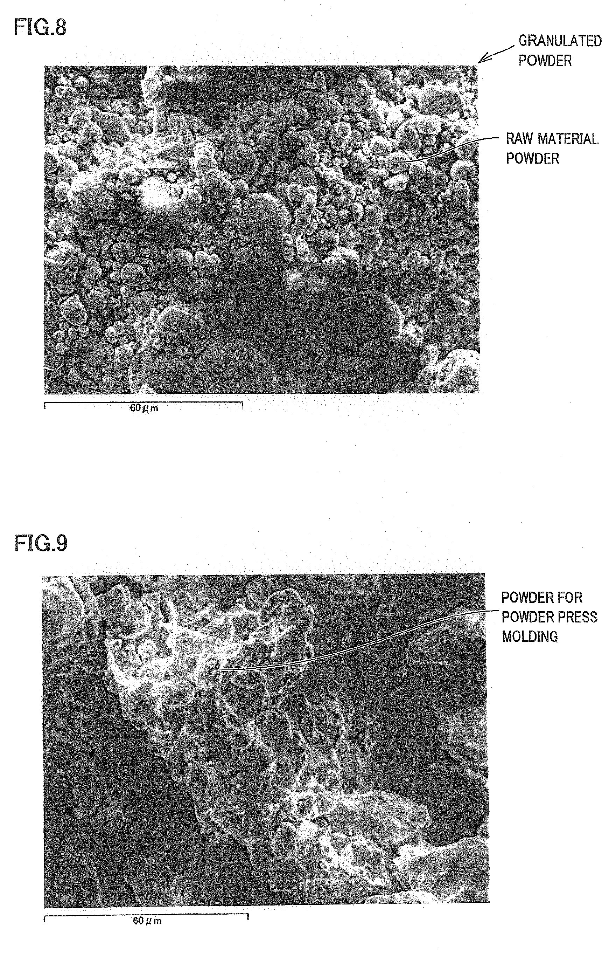

Referring to Figs. 4 and 7, the sample surface of granulated powder of Example 1 is shown. Referring to Figs. 5 and 8, the sample surface of granulated powder of Example 2 is shown. Referring to Figs. 6 and 9, the sample surface of granulated powder of Conventional Example 1 is shown. Referring to Figs. 4 to 9, it has been found out that the raw material powders of Example 1 and Example 2 were smaller than powder for powder press molding of Conventional Example 1.

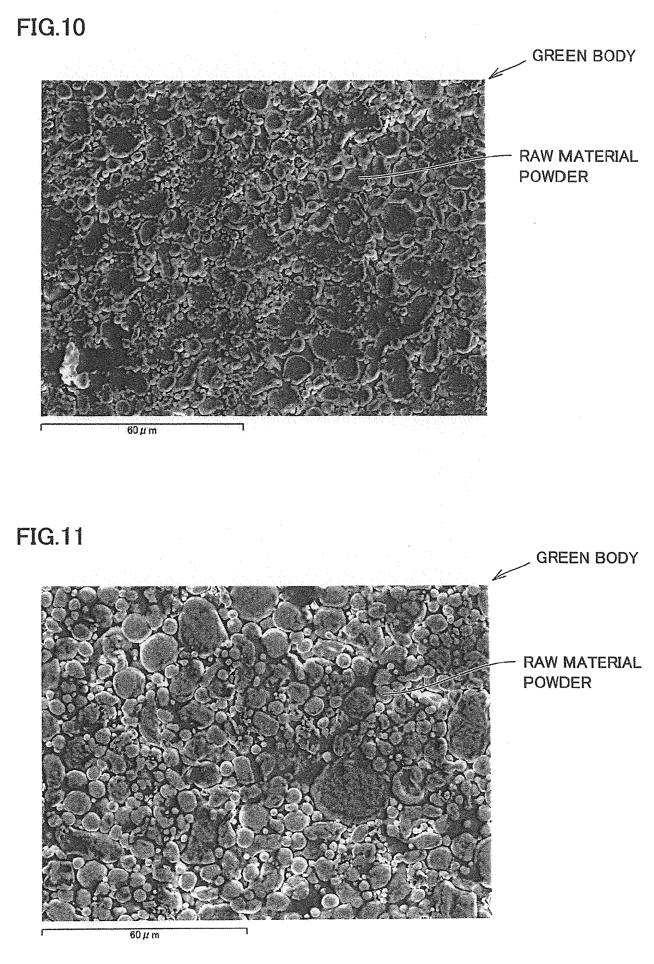

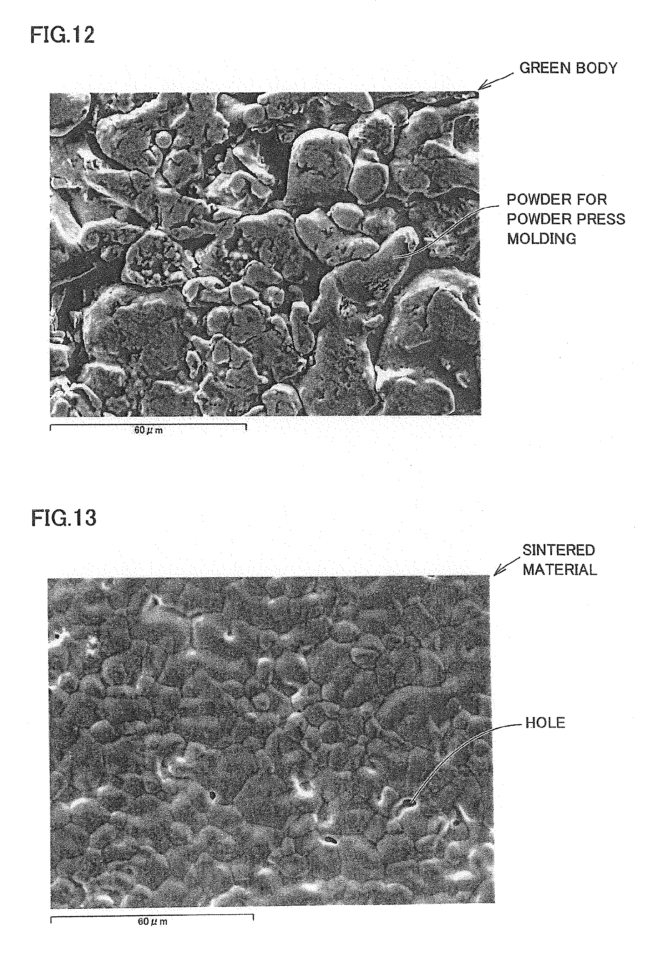

Referring to Fig. 10, the sample surface of green body of Example 1 is shown. Referring to Fig. 11, the sample surface of green body of Example 2 is shown. Referring to Fig. 12, the sample surface of green body of Example 3 is shown. Referring to Figs. 10 to 12, it has been found out that, in the green bodies of Example 1 and Example 2, raw material powder was agglomerated more densely and fewer holes were present than in Conventional Example 1.

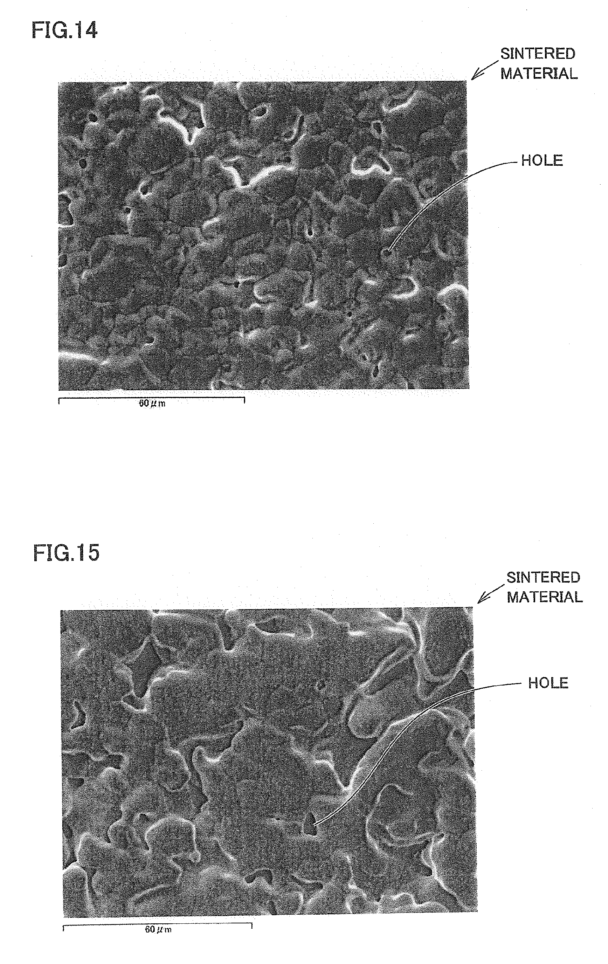

Referring to Fig. 13, the sample surface of sintered material of Example 1 is shown. Referring to Fig. 14, the sample surface of sintered material of Example 2 is shown. Referring to Fig. 15, the sample surface of sintered material of Conventional Example 1 is shown. Referring to Figs. 13 to 15, it has been found out that, in the sintered materials of Example 1 and Example 2, fewer holes were present than in Conventional Example 1.

From the foregoing, it has been found out that a higher density was achieved in Example 1 and Example 2 than in Conventional Example 1.

With materials and under sample producing conditions shown in Table 3, ten samples of each of Example 3 and Example 4 were produced as examples of the present invention.

[Table 3]

|  | Example 3 and Example 4 |
| --- | --- |
| Material | 2% Ni-containing iron alloy |
| Raw material powder grain size (D50) | 6 $\mu$m |
| Granulated powder grain size (D50) | 80 $\mu$m |
| Molding pressure | 600 MPa |
| Degreasing conditions (temperature, time) | 750˚C, 30 min. |
| Sintering conditions (temperature, time) | 1150˚C, 60 min. |

In Example 3 and Example 4, iron alloy granulated powder containing 2% Ni grains was used. A quenching process was performed in Example 3. A quenching process and a tempering process were performed in Example 4. In the quenching process, rapid cooling from a temperature of 850˚C was performed when lowering the temperature after the sintering process. In the tempering process, rapid cooling was performed after heating to and holding at a temperature of 500˚C. Each sample was a cylindrical sintered material having an outer diameter of 12 mm, an inner diameter of 6 mm, a height of 8 mm.

Example 3 and Example 4 were measured in relative density, radial crushing strength and Rockwell hardness. The relative density was obtained by measuring the density of sample and calculating in comparison with the true density of a 2% Ni-containing iron alloy as the material of sample. The true density of 2% Ni-containing iron alloy was set at 7.89 g/cm$^3$.

For the radial crushing strength, the radial crushing test of radially compressing the sample to measure the radial crushing strength. The radial crushing speed was set at 1 mm/min.

The measured results of relative density, radial crushing strength, and Rockwell hardness of Example 3 and Example 4 are shown in Table 4.

[Table 4]

|  | Example 3 | Example 4 |
| --- | --- | --- |
| Relative density | more than or equal to 92% | more than or equal to 92% |
| Radial crushing strength | more than or equal to 2500 N/mm$^2$ | more than or equal to 2500 N/mm$^2$ |
| Rockwell C scale hardness | HRC64 | HRC50 |

For the relative density, as shown in Table 4, the relative density of each of Example 3 and Example 4 was more than or equal to 92%.

For the radial crushing strength, as shown in Table 4, the radial crushing test was conducted in Example 3 and Example 4 by radial compression at 2500 N/mm$^2$. In each of Example 3 and Example 4, the occurrence of crack was not found, and breakage did not occur.

For the Rockwell C scale hardness, as shown in Table 4, Example 3 showed HRC64. It is noted that Example 3 should only be more than or equal to HRC50. Example 4 showed HRC50.

For Example 1, Example 2 and Conventional Example 1, the equivalent circle diameter of the maximum hole included in the sintered material was estimated using a so-called extreme value statistical method. It is noted that an extreme value distribution of the diameter of holes in the sintered material was a double-exponential distribution. The estimation method is as described below.

Representing an area to be a reference for sample test as a test reference area So (mm$^2$) and the number of tests as the number of tests n, a square root SR ($\mu$m) of the maximum hole area in test reference area So was measured. Square root SR is shown by Expression (1).

[Expression 1]

$$SR = \sqrt{area}_{\max} \qquad (1)$$

Measured square roots SR were rearranged in ascending order, and were each assigned with a number j (j=1-n). Each square root $SR_j$ is shown by Expression (2).

[Expression 2]

$$SR_j = \sqrt{area}_{\max,j} \quad (j = 1 \sim n) \qquad (2)$$

For each number j (j=1-n), a normalization variable $y_j$ was obtained from Expression (3).

[Expression 3]

$$y_j = -\ln\left[-\ln\left\{j/(n+1)\right\}\right] \qquad (3)$$

The measured results were plotted, with the horizontal axis indicating normalization variable $y_j$ and the vertical axis indicating square root $SR_j$. From the plot, a maximum hole distribution approximation straight line was obtained, and an inclination a and an intercept b of the maximum hole distribution straight line were obtained.

An area to be subjected to prediction is represented as a prediction area S (mm$^2$). A recursion period T is shown by Expression (4) based on prediction area S and test reference area So.

[Expression 4]

$$T = (S + S_0)/S_0 \qquad (4)$$

A normalization variable y was obtained by Expression (5) using recursion period T.

[Expression 5]

$$y = -\ln\left[-\ln\left\{(T-1)/T\right\}\right] \qquad (5)$$

Normalization variable y, inclination a and intercept b were substituted into Expression (6) to obtain square root SR of the maximum hole area included in prediction area S. In the present example, square root SR of the maximum hole area when prediction area S was 1000 mm$^2$ was evaluated.

[Expression 6]

$$\sqrt{area}_{max} = a \bullet y + b \qquad\qquad (6)$$

Let the diameter of a circle having the same area as the maximum hole area be an equivalent circle diameter. In the present example, the hole diameter was evaluated using the equivalent circle diameter.

The evaluated results of equivalent circle diameter of maximum hole for Example 1, Example 2 and the comparative example are shown in Table 5.

[Table 5]

|  | Example 1 | Example 2 | Conventional Example 1 |
|---|---|---|---|
| Equivalent circle diameter of maximum hole | 40 $\mu$m | 67 $\mu$m | 84 $\mu$m |

Referring to Table 2 and Table 5, many coarse holes were found at a relative density of less than 85% in Conventional Example 1. The equivalent circle diameter of the maximum hole was 84 $\mu$m in Conventional Example 1. In Example 2, coarse holes were not found at a relative density of more than or equal to 85% and less than 92%. The equivalent circle diameter of the maximum hole was 67 $\mu$m in Example 2. In Example 1, coarse holes were not found at a relative density of more than or equal to 92%. The equivalent circle diameter of the maximum hole was 40 $\mu$m in Example 1.

As described above, in Example 1, the occurrence of crack was not found in the radial crushing test, and breakage did not occur. In Example 2, there were cases found where a minute crack occurred, which however did not lead to breakage. In Conventional Example 1, a crack occurred in the radial crushing test, and breakage occurred.

Based on the foregoing, the inventor intensively studied to learn that if the equivalent circle diameter of the maximum hole included in the sintered material obtained by the extreme value statistical method is controlled to be less than or equal to 80 $\mu$m, a crack resulting from a large hole can be prevented from progressing when a stress is applied. It has been found out that an increase in strength and an increase in reliability can thereby be achieved.

Further, the inventor has learned that if the equivalent circle diameter of the maximum hole included in the sintered material obtained by the extreme value statistical method is controlled to be less than or equal to 40 $\mu$m, a crack resulting from a large hole can further be prevented from progressing when a stress is applied. It has been found out that a further increase in strength and a further increase in reliability can thereby be achieved. It is noted that, since holes in the sintered material can be eliminated, the lower limit of the equivalent circle diameter of the maximum hole included in the sintered material obtained by the extreme value statistical method is more than or equal to 0 um.

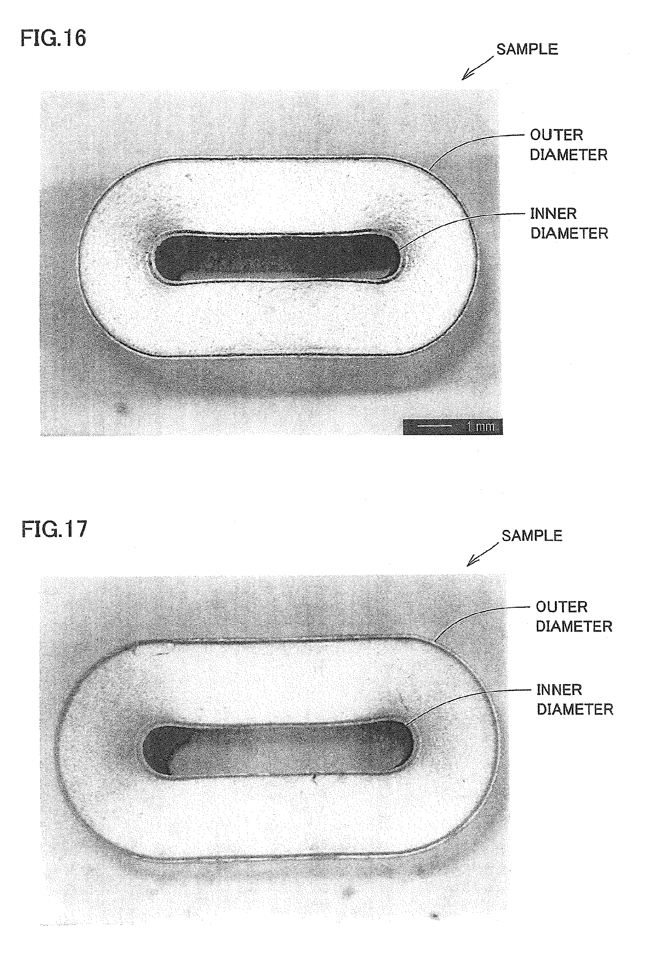

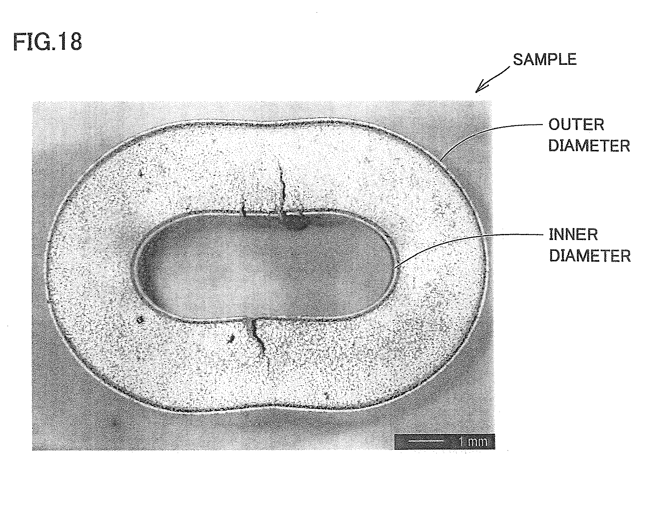

Referring to Figs. 16 to 18, the shapes of samples of Example 1, Example 2 and Conventional Example 1 after the radial crushing test are shown. Figs. 16 to 18 are views seen in the height direction of each sample such that the outer diameter and inner diameter of each sample are visible.

It should be understood that the embodiments and examples disclosed herein are illustrative and non-restrictive in every respect. The scope of the present invention is defined by the claims, not by the description above, and is intended to include any modification within the meaning and scope equivalent to the terms of the claims.

INDUSTRIAL APPLICABILITY

The present invention may be applied particularly advantageously to a power transmission part made of a sintered material.

REFERENCE SIGNS LIST

10 gear, 20 cam

**Claims**

1. A power transmission part (10, 20) made of a sintered material obtained by press molding and firing granulated powder obtained by granulating raw material powder having iron as a main component.

2. The power transmission part (10, 20) according to claim 1, wherein said sintered material has a relative density of more than or equal to 85%.

3.  The power transmission part (10, 20) according to claim 1, wherein said sintered material has a breaking strength of more than or equal to 1500 N/mm$^2$.

4.  The power transmission part (10, 20) according to claim 1, wherein said raw material powder has a powder grain size (D50) of less than or equal to 20 $\mu$m.

5.  The power transmission part (10, 20) according to claim 1, wherein said granulated powder has a powder grain size (D50) of less than or equal to 500 $\mu$m.

6.  The power transmission part (10, 20) according to claim 1, wherein a pressure at which said granulated powder is press molded is more than or equal to 400 MPa and less than or equal to 800 MPa.

7.  The power transmission part (10, 20) according to claim 1, wherein said sintered material is further subjected to a quenching process, and has a Rockwell C scale hardness of more than or equal to HRC50.

8.  The power transmission part (10, 20) according to claim 7, wherein said sintered material is further subjected to a tempering process, and has a Rockwell C scale hardness of more than or equal to HRC50.

9.  The power transmission part (10, 20) according to claim 1, wherein said power transmission part (10, 20) is at least one of a gear and a cam.

10. The power transmission part (10, 20) according to claim 1, wherein an equivalent circle diameter of a maximum hole included in said sintered material obtained by an extreme value statistical method is less than or equal to 80 $\mu$m.

11. The power transmission part (10, 20) according to claim 10, wherein the equivalent circle diameter of the maximum hole included in said sintered material obtained by the extreme value statistical method is less than or equal to 40 $\mu$m.

FIG.1

10

FIG.2

20

FIG.3

```
                              ┌─ S10
        ┌──────────────────────────┐
        │ RAW MATERIAL POWDER       │
        │ PREPARING STEP            │
        └──────────────────────────┘
                    │
                    ▼         ┌─ S20
        ┌──────────────────────────┐
        │    GRANULATING STEP       │
        └──────────────────────────┘
                    │
                    ▼         ┌─ S30
        ┌──────────────────────────┐
        │    PRESS MOLDING STEP     │
        └──────────────────────────┘
                    │
                    ▼         ┌─ S40
        ┌──────────────────────────┐
        │    DEGREASING STEP        │
        └──────────────────────────┘
                    │
                    ▼         ┌─ S50
        ┌──────────────────────────┐
        │    SINTERING STEP         │
        └──────────────────────────┘
                    │
                    ▼         ┌─ S60
        ┌──────────────────────────┐
        │    QUENCHING STEP         │
        └──────────────────────────┘
                    │
                    ▼         ┌─ S70
        ┌──────────────────────────┐
        │    TEMPERING STEP         │
        └──────────────────────────┘
```

FIG.4

GRANULATED
POWDER

RAW MATERIAL
POWDER

100 μm

FIG.5

GRANULATED
POWDER

RAW MATERIAL
POWDER

100 μm

FIG.6

POWDER FOR
POWDER PRESS
MOLDING

100 μm

FIG.7

GRANULATED
POWDER

RAW MATERIAL
POWDER

60 μm

FIG.8

GRANULATED
POWDER

RAW MATERIAL
POWDER

60 μm

FIG.9

POWDER FOR
POWDER PRESS
MOLDING

60 μm

FIG.10

GREEN BODY

RAW MATERIAL
POWDER

60 μm

FIG.11

GREEN BODY

RAW MATERIAL
POWDER

60 μm

## FIG.12

GREEN BODY

POWDER FOR POWDER PRESS MOLDING

60 μm

## FIG.13

SINTERED MATERIAL

HOLE

60 μm

FIG.14

SINTERED MATERIAL

HOLE

60 μm

FIG.15

SINTERED MATERIAL

HOLE

60 μm

## FIG.16

SAMPLE

OUTER DIAMETER

INNER DIAMETER

1 mm

## FIG.17

SAMPLE

OUTER DIAMETER

INNER DIAMETER

FIG.18

SAMPLE

OUTER
DIAMETER

INNER
DIAMETER

1 mm

**EP 2 484 788 A1**

| | | | |
|---|---|---|---|

**INTERNATIONAL SEARCH REPORT**

International application No.

PCT/JP2010/065944

A. CLASSIFICATION OF SUBJECT MATTER
*C22C33/02*(2006.01)i, *B22F1/00*(2006.01)i, *B22F3/02*(2006.01)i, *B22F3/24*
(2006.01)i, *C21D9/32*(2006.01)i, *F16H53/00*(2006.01)n, *F16H55/06*(2006.01)n

According to International Patent Classification (IPC) or to both national classification and IPC

B. FIELDS SEARCHED

Minimum documentation searched (classification system followed by classification symbols)
C22C33/02, B22F1/00, B22F3/02, B22F3/24, C21D9/32, F16H53/00, F16H55/06

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-294905 A (Nippon Kagaku Yakin Co., Ltd.), 26 October 2001 (26.10.2001), claims; paragraphs [0009], [0054], [0056] (Family: none) | 1-11 |
| X | JP 04-214801 A (Kawasaki Steel Corp.), 05 August 1992 (05.08.1992), claims; paragraph [0011] (Family: none) | 1-11 |
| X | JP 2004-346380 A (Seiko Epson Corp.), 09 December 2004 (09.12.2004), claims; paragraph [0003] (Family: none) | 1-11 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>13 December, 2010 (13.12.10) | Date of mailing of the international search report<br>21 December, 2010 (21.12.10) |
| Name and mailing address of the ISA/<br>Japanese Patent Office | Authorized officer |
| Facsimile No. | Telephone No. |

Form PCT/ISA/210 (second sheet) (July 2009)

23

**EP 2 484 788 A1**

<table>
<tr><td colspan="2">INTERNATIONAL SEARCH REPORT</td><td>International application No.<br>PCT/JP2010/065944</td></tr>
<tr><td colspan="3">C (Continuation). DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>X</td><td>JP 3952006 B2 (Seiko Epson Corp.),<br>01 August 2007 (01.08.2007),<br>claims; paragraph [0046]<br>(Family: none)</td><td>1-11</td></tr>
</table>

Form PCT/ISA/210 (continuation of second sheet) (July 2009)

**EP 2 484 788 A1**

**Patent documents cited in the description**

• JP 2004197157 A